# EUROPEAN PATENT SPECIFICATION

(11) **EP 1 357 991 B1**
(45) Date of publication and mention of the grant of the patent: **05.05.2010**
(21) Application number: 02703566.6
(22) Date of filing: 22.01.2002
(51) Int. Cl.: B01D 39/20

(54) **FILTER FOR FLUIDS WITH LAYERED ARRANGEMENT**
FLUIDFILTER MIT SCHICHTENAUFBAU
FILTRE POUR FLUIDES COMPORTANT UNE STRUCTURE A COUCHES

(30) Priority: 31.01.2001 IT MI20010177
(43) Date of publication of application: 05.11.2003
(73) Proprietor: SOGEFI S.p.A., 46100 Mantova (IT)
(72) Inventor: BARACCHI, Paolo, I-10155 Torino (IT)
(74) Representative: Modiano, Micaela Nadia
(86) International application number: PCT/EP2002/000592
(87) International publication number: WO 2002/060559

(56) References cited:
- EP-A- 0 955 078
- GB-A- 2 256 601
- US-A- 5 275 743
- US-A- 5 472 467

## Description

### Technical Field

The present invention relates to a filtering mass in a filter for fluids.

### Background of the Invention

It is known to use, in many fields of technology, filters adapted to retain the impurities that are present in the most disparate fluids.

This is the case, for example, of the circuits for the lubricating oil of internal-combustion engines, which during operation is pumped continuously from a sump that acts as a reservoir, in order to be sent to lubricate the kinematic couplings that are present in such engines after passing through a filter, which retains the impurities.

However, filters are also present in circuits that convey gas oil or Diesel fuel from a tank to internal-combustion engines or to boilers and also in the gasoline circuits of such engines, and there is also a wide range of air filters for conditioning systems for civil and industrial use and for cabins of vehicles such as cars.

Known filters have many constructive forms, which however are all essentially based on a structure for supporting and containing a filtering mass, through which the fluid to be filtered is passed, moving between a region connected to an inlet connector and a region connected to an outlet connector.

Very often, the filtering mass is constituted by a sheet which comprises a plurality of layers and is inserted in the filter after being folded or rolled up in order to give a large area to the filtering surface even in a compact filter.

A particular type of filtering mass in sheet form is disclosed in EP-A-0 955 078.

The filtering mass disclosed in EP-A-0 955 078 comprises at least one layer, which is meant to be the first one crossed by the fluid to be filtered and is suitable to provide a coarse filtration, and a second layer, which is suitable to provide fine filtration; an optional third supporting layer, arranged so as to be the last one crossed by the fluid, can be provided.

The first layer is made of paper, the second layer is made of glass fiber and can be monolithic or divided into two sub-layers, and the third supporting layer is normally made of paper or mesh.

Naturally, both the paper and the glass fiber can receive the addition of other substances in a per se known manner; hereinafter, when using the terms "paper" or "glass fiber", reference is always intended to such materials with the optional addition of other substances.

The described filtering mass has high functionality, because the impurities are retained so as to be distributed in two layers depending on their dimensions, and this fact gives the filter a high accumulation capacity and optimum efficiency; however, continuous study and research activity have allowed to identify the improvements for which protection is now being sought, such improvements having the specific aim of improving the characteristics of mechanical strength and compactness of the resulting filtering mass.

### Disclosure of the Invention

This aim is achieved by a filtering mass in a filter for fluids as defined in the appended claims.

### Brief description of the drawings

Further characteristics and advantages of the invention will become better apparent from the following detailed description of some preferred but not exclusive embodiments thereof, illustrated only by way of non-limitative example in the accompanying drawings, wherein:
Figure 1 is a perspective view of a portion of a sheet of filtering mass according to a first embodiment of the present invention;
Figure 2 is a perspective view of a portion of a sheet of filtering mass according to a further embodiment of the invention.

### Ways to carrying out the Invention

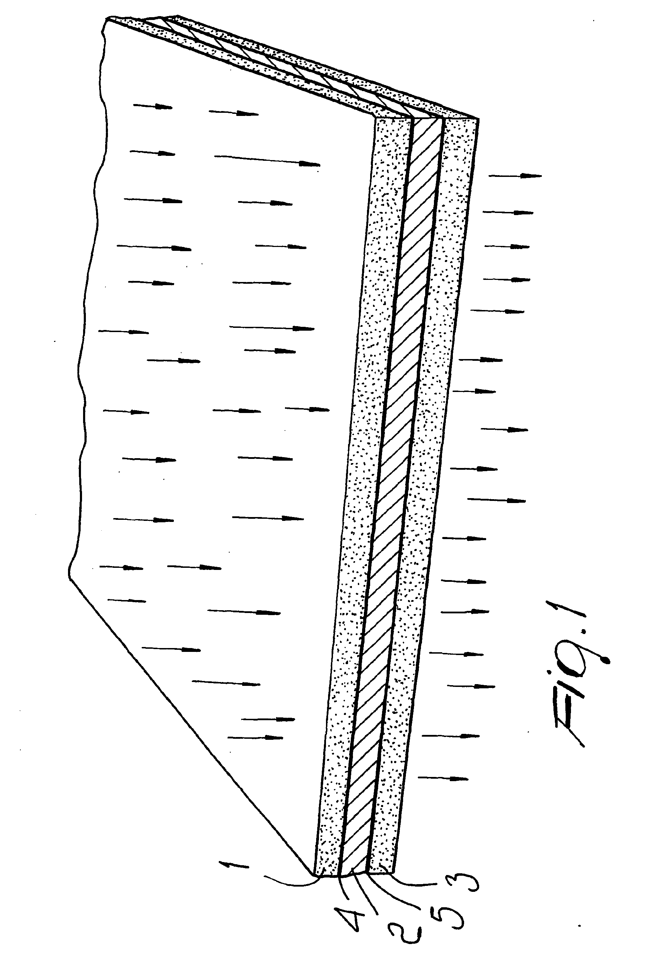

With reference to Figure 1, the reference numeral 1 designates at least one first layer, which is made of paper and is meant to be crossed by a fluid to be filtered, as shown by the arrows, and is suitable to provide a coarse filtration, i.e., to retain particles with dimensions of for example more than 25 microns.

Further, the reference numeral 2 designates a layer that is formed monolithically of glass fibers and is suitable to provide a fine filtration, i.e., to retain particles of impurities with dimensions of, for example, more than 7 microns.

Finally, the reference numeral 3 designates a supporting layer, which is arranged so as to be the last layer crossed by the fluid and is made of paper, obviously having a permeability that is higher than, or at the most equal to, the permeability of the first layer.

All this occurs in a known manger.

The important characteristic of the invention is the presence of two layers 4, 5 made of non-woven fabric, which are in contact with both surfaces of the layer 2 made of glass fiber.

The resulting filtering mass has a considerable mechanical strength, and its compactness is such as to rule out the separation of glass fiber particles, which might be dispersed into the filtered fluid.

The described layers, before being folded or rolled up to form the filtering mass to be inserted in a filter, can be joined by simple resting contact or can be rigidly coupled for example by gluing, stitching, welding, or pressure points; said layers might also be produced together during a single formation process.

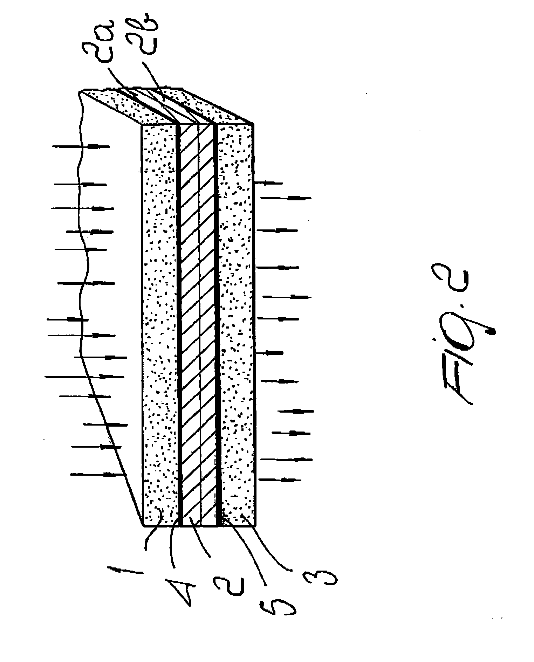

Figure 2 illustrates a second embodiment of the invention, which differs from the embodiment of Figure 1 only because the layer 2 made of glass fiber, delimited by the layers 4 and 5 made of non-woven fabric, is formed by two sub-layers 2a and 2b.

The described invention is susceptible of other modifications and variations, for example, the supporting layer 3 can be made of mesh.

## Claims

1. A filtering mass in a filter for fluids, comprising at least one layer (1), which is made of paper and is meant to be the first one crossed by a fluid in order to provide coarse filtration, and a second layer (2), which is made of glass fiber and is suitable to provide fine filtration, and a third supporting layer (3), arranged so as to be the last layer to be crossed by the fluid, **characterized in that** it further comprises two layers (4,5) of non-woven fabric each in contact with one of the surfaces of the second layer (2).

2. The filtering mass according to claim 1, **characterized in that** said second layer (2) is provided by means of two sub-layers (2a,2b) of glass fiber.

## Patentansprüche

1. Eine Filtermasse in einem Fluidfilter bestehend aus wenigstens einer Papierschicht (1), die als erste von der Flüssigkeit durchquert wird, für eine grobe Filtrierung, und einer zweiten Schicht (2) aus Fiberglas, die geeignet ist für eine feine Filtrierung, sowie einer dritten tragenden Schicht (3), die so angeordnet ist, dass sie als letzte Schicht von dem Fluid durchquert wird, **dadurch gekennzeichnet, dass** sie ferner zwei Schichten (4, 5) aus Faservlies umfasst, die jeweils eine der Oberflächen der zweiten Schicht (2) berühren.

2. Filtermasse nach Anspruch 1, **dadurch gekennzeichnet, dass** die zweite Schicht (2) aus zwei Teilschichten (2a, 2b) aus Fiberglas besteht.

## Revendications

1. Masse filtrante d'un filtre pour fluides, comprenant au moins une couche (1), qui est réalisée en papier et est destinée à être la première couche traversée par un fluide afin d'assurer une filtration grossière, une deuxième couche (2), qui est réalisée en fibre de verre et convient pour assurer une filtration fine, et une troisième couche de support (3), agencée pour être la dernière couche à être traversée par le fluide, **caractérisée en ce qu'**elle comprend en outre deux couches (4, 5) de tissu non tissé, chacune étant en contact avec l'une des surfaces de la deuxième couche (2).

2. Masse filtrante selon la revendication 1, **caractérisée en ce que** ladite deuxième couche (2) est formée par deux sous-couches (2a, 2b) de fibre de verre.
